# EUROPEAN PATENT APPLICATION

(11) **EP 4 685 595 A1**
(43) Date of publication of application: **28.01.2026**
(21) Application number: 24869442.4
(22) Date of filing: 11.07.2024
(51) Int. Cl.: G05B 23/02

(54) **FAULT INJECTION TEST SYSTEM**

(30) Priority: 05.06.2024 CN 202410725901
(71) Applicant: Beijing Jingwei Hirain Technologies Co., Inc., Beijing 100015 (CN)
(72) Inventor: WANG, Yongting, Beijing 100015 (CN); LIU, Xintong, Beijing 100015 (CN); LI, Mingjia, Beijing 100015 (CN); DONG, Jianwen, Beijing 100015 (CN)
(74) Representative: Viering, Jentschura & Partner mbB Patent- und Rechtsanwälte
(86) International application number: PCT/CN2024/104966
(87) International publication number: WO 2025/251380

(57) **Abstract**

Disclosed is a fault injection testing system. The system comprises: a backplane module comprising a switch chip, a plurality of first connectors, and a plurality of second connectors, the plurality of second connectors are connected to a fault rail, the switch chip is configured to be connected to an upper computer, and the switch chip is connected to the plurality of first connectors; an execution board module connected to the corresponding first connector and two second connectors and configured to provide a corresponding fault signal for the fault rail through one of the two second connectors in response to an instruction of the upper computer; and at least one fault injection module connected to the corresponding first connector and second connector respectively and configured to be connected to an external ECU and configured to select the corresponding fault signal for injection from the fault rail in response to an instruction of the upper computer.

## Description

### CROSS-REFERENCE TO RELATED APPLICATION

The present disclosure claims priority to Chinese patent application No. 202410725901.0, entitled "FAULT INJECTION TESTING SYSTEM" filed on June 5, 2024, which is incorporated herein by reference in its entirety.

### TECHNICAL FIELD

The present disclosure belongs to the field of fault testing technology, and in particular, relates to a fault injection testing system.

### BACKGROUND

At present, in the development, testing, and verification stage of an automotive electronic control unit (ECU), hardware functions of the ECU can be tested and verified by simulating input signals, output signals and communication signals of the ECU, and fault testing environments can also be simulated by injecting fault signals.

### SUMMARY

Embodiments of the present disclosure provide a fault injection testing system, which can overcome technical defects during fault simulation testing in related technologies.

An embodiment of the present disclosure provides a fault injection testing system, including:
a backplane module including a switch chip, a plurality of first connectors, and a plurality of second connectors, where the plurality of second connectors are connected to a fault rail, one uplink port of the switch chip is configured to be connected to an external upper computer, and a plurality of downlink ports of the switch chip are connected to the plurality of first connectors respectively;
an execution board module connected to the corresponding first connector and two second connectors and configured to communicate with the upper computer through the first connector and to provide a corresponding fault signal for the fault rail through one of the two second connectors in response to a fault selection instruction of the upper computer; and
at least one fault injection module, where each of the fault injection modules is connected to the corresponding first connector and the second connector, and the fault injection module is configured to be connected to an external electronic control unit and configured to communicate with the upper computer through the first connector and select the corresponding fault signal for injection from the fault rail through the second connector in response to a fault injection instruction of the upper computer.

In some embodiments, the backplane module further includes a plurality of slots, and the slots are connected to the first connectors and the second connectors; and
when the execution board module or the fault injection module is inserted into the corresponding slot, the execution board module is connected to the corresponding first connector and two second connectors, and the fault injection module is connected to the corresponding first connector and second connector.

In some embodiments, the first connector is a high-speed and high-density connector, and the high-speed and high-density connector is connected to one downlink port of the switch chip and configured to connect the execution board module or the fault injection module with the switch chip for communication; and
the second connector is a high current connector, and the high current connector is connected to the fault rail and configured to connect the execution board module or the fault injection module with the fault rail through the backplane module.

In some embodiments, the fault injection module includes:
a communication interface connected to the first connector corresponding to the fault injection module;
an FPGA control unit connected to the communication interface and configured to communicate in response to control instructions of the upper computer;
a plurality of fault injection units connected between the fault rail and the external electronic control unit, where a control terminal of each of the fault injection units is connected to the FPGA control unit, and each of the fault injection units is configured to select the corresponding fault signal from the fault rail to inject the fault signal into the external electronic control unit in response to a control signal of the FPGA control unit; and
a plurality of input/output units, where each of the input/output units is connected between the external electronic control unit and the fault injection unit, a control terminal of the input/output unit is connected to the FPGA control unit, and the input/output unit is configured to collect signal voltage from the external electronic control unit or provide signal voltage to the electronic control unit in response to an input/output signal of the FPGA control unit.

In some embodiments, the input/output unit includes an analog input unit, an analog output unit, a digital input unit, or a digital output unit.

In some embodiments, the analog input unit includes:
a first signal conditioning circuit, where one of input terminals of the first signal conditioning circuit is connected to a reference ground terminal of the external electronic control unit, and the other input terminal is connected to an output terminal of the external electronic control unit through the fault injection unit; and
an analog-to-digital conversion chip connected between an output terminal of the first signal conditioning circuit and the FPGA control unit.

In some embodiments, the digital input unit includes:
a first digital-to-analog conversion chip connected to the FPGA control unit and configured to generate analog voltage in response to an output voltage signal; and
a comparator, where two input terminals of the comparator are connected to an output terminal of the first digital-to-analog conversion chip and the output terminal of the external electronic control unit separately.

In some embodiments, the analog output unit includes:
a second digital-to-analog conversion chip connected to the FPGA control unit and configured to generate analog voltage in response to an output voltage signal;
a second signal conditioning circuit, where two input terminals of the second signal conditioning circuit are connected to the reference ground terminal of the external electronic control unit and the second digital-to-analog conversion chip separately, and the second signal conditioning circuit is configured to amplify the analog voltage; and
an overvoltage/overcurrent protection circuit connected between the input terminals of the second signal conditioning circuit and the fault injection unit.

In some embodiments, the digital output unit includes:
a high-side driver module connected between a reference voltage terminal and an output voltage terminal, where a control terminal of the high-side driver module is connected to the FPGA control unit through an isolation module; and
a low-side driver module connected between the reference ground terminal and the output voltage terminal, where a control terminal of the low-side driver module is connected to the FPGA control unit;
where the FPGA control unit is configured to control the connection and disconnection of the high-side driver module and the low-side driver module by adjusting the duty cycle and frequency of output signals, to generate digital voltage signals.

In some embodiments, the digital output unit further includes:
a high-side switch module, where a plurality of input terminals of the high-side switch module are connected to a plurality of reference voltage terminals respectively, an output terminal of the high-side switch module is connected to the high-side driver module, a control terminal of the high-side switch module is connected to the FPGA control unit, and the high-side switch module is configured to connect one of the plurality of input terminals to the output terminal in response to a selection signal.

In some embodiments, the fault injection unit includes:
an open-circuit fault control switch connected to the external electronic control unit and configured to open in response to an open-circuit fault signal; and
two fault type control switches, where one of the fault type control switches is connected between a first fault rail and a first terminal of the open-circuit fault control switch, and the other fault type control switch is connected between a second fault rail and a second terminal of the open-circuit fault control switch;
where the FPGA control unit is connected to a control terminal of the open-circuit fault control switch and control terminals of the fault type control switch.

In some embodiments, the fault rail includes two current fault rails and two capacitor fault rails; and
the fault injection module including the analog input unit or digital input unit is connected to the two current fault rails, and the fault injection module including the analog output unit or digital output unit is connected to the two capacitor fault rails.

In some embodiments, the fault injection testing system includes at least two backplane modules, and the execution board module is connected to the first connector and second connector of one of the backplane modules; the fault rails of the plurality of backplane modules are cascaded through connectors, and clock signal rails of the plurality of backplane modules are cascaded through connectors.

### BRIEF DESCRIPTION OF THE DRAWINGS

Features and exemplary embodiments of various aspects of the present disclosure will be described in detail below. To make the objectives, technical solutions, and advantages of the present disclosure clearer, the present disclosure is further described in detail below with reference to the accompanying drawings and specific embodiments. It should be understood that the specific embodiments described herein are only intended to explain the present disclosure and not to limit the present disclosure. For those skilled in the art, the present disclosure can be implemented without some of these specific details. The following description of the embodiments is only intended to provide a better understanding of the present disclosure by illustrating examples of the present disclosure.
Fig. 1 is a schematic structural view of a fault injection testing system provided in an embodiment of the present disclosure;
Fig. 2 is a schematic structural view of a fault injection module provided in an embodiment of the present disclosure;
Fig. 3 is a schematic view of a circuit structure when the fault injection module includes an analog input unit, provided in an embodiment of the present disclosure;
Fig. 4 is a schematic view of a circuit structure when the fault injection module includes a digital input unit, provided in an embodiment of the present disclosure;
Fig. 5 is a schematic view of a circuit structure when the fault injection module includes an analog output unit, provided in an embodiment of the present disclosure;
Fig. 6 is a schematic view of a circuit structure when the fault injection module includes a digital output unit, provided in an embodiment of the present disclosure; and
Fig. 7 is a schematic structural view of a fault injection testing system provided in another embodiment of the present disclosure.

### LIST OF REFERENCES

10. Backplane module; 11. Switch chip; 20. Execution board module; 30. Fault injection module; con1. First connector; con2. Second connector; 31. Communication interface; 33. Fault injection unit; 34. Input/output unit; 341. Analog input unit; 342. Digital input unit; 343. Analog output unit; 344. Digital output unit; OP1. First signal conditioning circuit; OP2. Second signal conditioning circuit; ADC. Analog-to-digital conversion chip; Com. Comparator; DAC1. First digital-to-analog conversion chip; DAC2. Second digital-to-analog conversion chip.

### DETAILED DESCRIPTION

It should be noted that the relationship terms herein, such as first and second, are merely used for distinguishing one entity or operation from another, and do not necessarily require or imply that any actual relationship or sequence exists between these entities or operations. Moreover, the terms "include", "comprise", and any variants thereof are intended to cover a non-exclusive inclusion, so that a process, method, article, or device including a series of elements not only includes those elements, but further includes other elements not listed explicitly, or includes inherent elements of the process, method, article, or device. In the absence of more limitations, an element defined by "include a..." does not exclude other same elements existing in the process, method, article, or device including the element.

It should also be noted that the embodiments in the present disclosure and the features in the embodiments may be combined with each other on a non-conflict basis. The following will provide a detailed description of the embodiments in conjunction with the accompanying drawings.

At present, in the development, testing, and verification stage of an automotive electronic control unit (ECU), hardware functions of the ECU can be tested and verified by simulating input signals, output signals, and communication signals of the ECU, and fault testing environments can also be simulated by injecting fault signals.

However, when fault simulation testing is performed on the ECU, the overall system solution involving hardware module resources is relatively complex, and signal connections between input/output signal boards and fault injection boards require targeted layout design, which is prone to wiring errors to affect the efficiency of fault simulation testing, and to cause low integration and standardization of the system.

In order to solve the above technical problems, embodiments of the present disclosure provide a fault injection testing system. The fault injection testing system provided in embodiments of the present disclosure will be first introduced below.

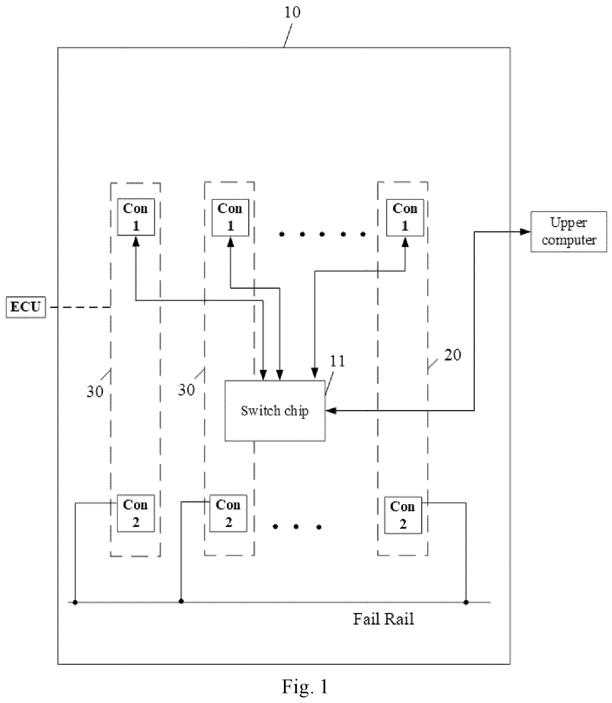

Fig. 1 illustrates a schematic structural view of a fault injection testing system provided in an embodiment of the present disclosure. The fault injection testing system may include a backplane module 10, an execution board module 20, and at least one fault injection module 30.

The backplane module 10 includes a switch chip 11, a plurality of first connectors con1, and a plurality of second connectors con2. The switch chip 11 can support expanding one uplink port and a plurality of downlink ports. The uplink port may be connected to an external upper computer. The upper computer may be a computer, a PC (Personal Computer), or other devices capable of sending control commands. The plurality of downlink ports of the switch chip 11 are connected to the plurality of first connectors con1 respectively, and the plurality of second connectors con2 may be connected to a Fault Rail on the backplane module 10.

The execution board module 20 may be connected to one corresponding first connector con1 and two corresponding second connectors con2. The execution board module 20 may be connected to one downlink port of the switch chip 11 through the first connector con1 and communicate with the upper computer through the switch chip 11. The execution board module 20 may be connected to the Fault Rail through the two second connectors con2.

The execution board module 20 may receive a fault selection instruction sent by the upper computer, generate a corresponding fault signal, and provide the fault signal to the Fault Rail through one of the two second connectors con2. The execution board module 20 may simultaneously provide a plurality of different types of fault signals.

It can be understood that the Fault Rail connected to the execution board module 20 includes two current fault rails and two capacitor fault rails. The execution board module 20 may provide corresponding current fault signals for the two current fault rails and capacitor fault signals for the two capacitor fault rails respectively, based on fault selection instructions.

Among the at least one fault injection module 30, each fault injection module 30 may be connected to one corresponding first connector con1 and one corresponding second connector con2, and the fault injection module 30 may further be connected to an external ECU.

The fault injection module 30 may be connected to the corresponding downlink port of the switch chip 11 through the first connector con1, to communicate with the upper computer through the switch chip 11 and receive fault injection instructions output by the upper computer. The fault injection module 30 may be connected to the Fault Rail through the second connector con2.

According to the fault injection instructions output by the upper computer, the fault injection module 30 may select a corresponding fault signal from the Fault Rail and inject it into the external ECU. For example, the upper computer may control the execution board module 20 to provide a short-circuit fault signal to one of the current fault rails, and control the fault injection module 30 to select the short-circuit fault signal of the current fault rail to inject it into the external ECU or into a voltage signal provided by the ECU to a corresponding hardware load.

In this embodiment, because each fault injection module 30 can independently inject the selected fault signal into the corresponding ECU and load thereof according to the relevant instruction of the upper computer, the fault injection module 30 and the execution board module 20 can be integrated on the backplane module 10 and communicate with the upper computer through the switch chip 11. Based on the control instructions of the upper computer, multifunctional fault injection and transmission of IO signals required by the ECU are implemented, an integrated multifunctional fault injection testing environment is achieved, the problem of low integration of fault injection testing devices is solved, and high integration effects of multifunctional fault injection testing devices are achieved.

It should be noted that the switch chip 11 may be a PCIe (Peripheral component interconnect express, high-speed serial computer expansion bus standard) Switch chip. The PCIe Switch chip can integrate a PCIe communication bus into the backplane module 10. In one example, the chip can expand 20 PCIe ports, including 1 PCIe uplink port connected to the upper computer CPU; 1 PCIe downlink port connected to a PCIe port of the execution board module 20; and 18 PCIe downlink ports connected to PCIe ports of the fault injection modules 30. The upper computer can achieve PCIe communication with the execution board module 20 and PCIe communication with any fault injection module 30.

In some embodiments, the backplane module 10 may further include a plurality of slots, each of which is connected to the first connector and the second connector.

Among the 19 downlink ports expanded by the switch chip 11, the downlink port connected to the execution board module 20 corresponds to two second connectors con2. Therefore, other fault injection modules 30 cannot be connected to the downlink port, which are only available for insertion of the execution board module 20. For example, the plurality of slots included in the backplane module 10 may include one first slot and a plurality of second slots, the first slot corresponds to one first connector con1 and two second connectors con2, and the second slot corresponds to one first connector con1 and one second connector con2. The execution board module 20 may be inserted into the first slot, and the fault injection module 30 may be inserted into the second slot.

When the execution board module 20 is inserted into the corresponding first slot, the execution board module 20 can be connected to the corresponding first connector and second connector through the first slot. Correspondingly, when the fault injection module 30 is inserted into the corresponding second slot, the fault injection module 30 can be connected to the corresponding first connector and second connector through the second slot.

In some embodiments, the first connectors con1 may be high-speed and high-density connectors, and the second connectors con2 may be high current connectors.

The high-speed and high-density connector may be connected to one downlink port of the switch chip 11. When the high-speed and high-density connector is connected to the execution board module 20, the execution board module 20 can be connected to the switch chip 11 for communication. When the high-speed and high-density connector is connected to the fault injection module 30, the fault injection module 30 can be connected to the switch chip 11 for communication.

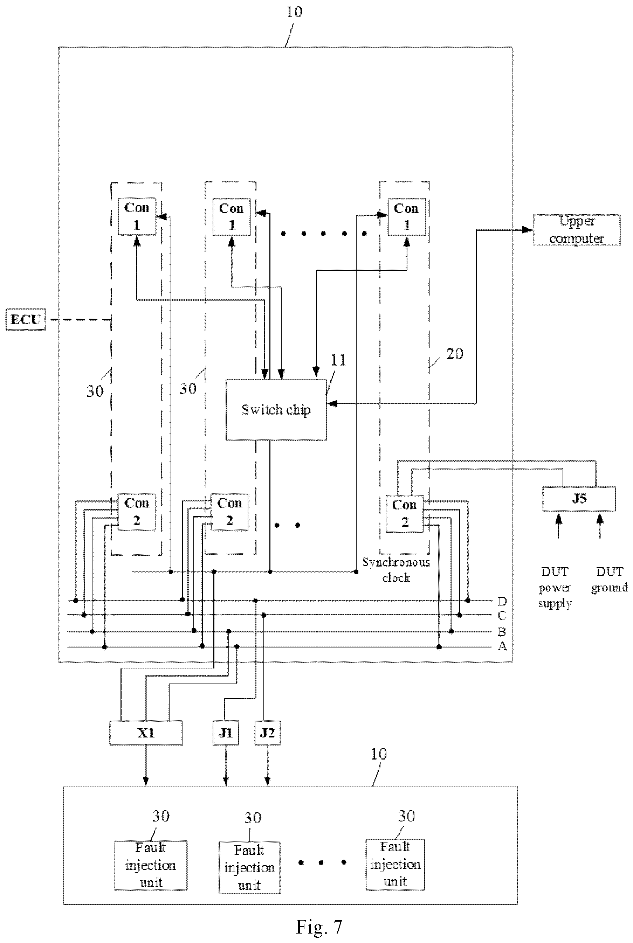

The high-speed and high-density connectors and the high current connectors may correspond one to one with the number of downlink ports expanded on the backplane module 10. For example, when the switch chip 11 expands 19 downlink ports, the backplane module 10 may include 19 high-speed and high-density connectors and 20 high current connectors. That is, the downlink port connected to the execution board module 20 corresponds to 1 high-speed and high-density connector and 2 high current connectors, with 1 high current connector configured to be connected to the Fault Rail to provide a corresponding fault signal for the Fault Rail. As shown in Fig. 7, the other high current connector may be connected to a connector J5 to perform short-circuit faults to power and ground.

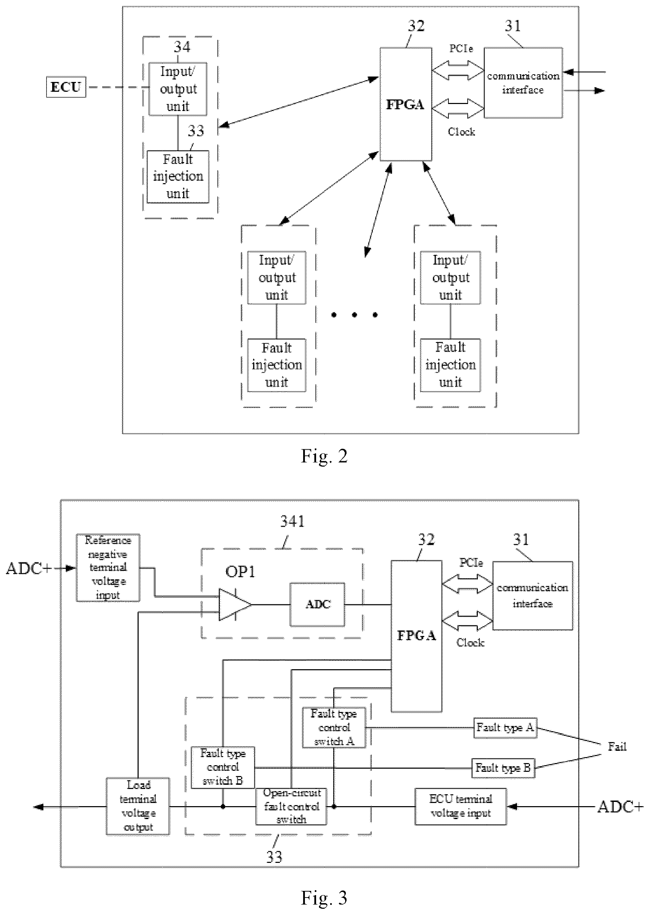

With reference to Fig. 2, in some embodiments, the fault injection module 30 may include a communication interface 31, an FPGA control unit 32, a plurality of fault injection units 33, and a plurality of input/output units 34.

The communication interface 31 is connected to the first connector con1 corresponding to the fault injection module 30.

The FPGA control unit 32 may be connected to the communication interface 31 and achieve communication connection with the switch chip 11 through the first connector con1 to receive control instructions from the upper computer. The FPGA control unit 32 may communicate with the upper computer in response to the control instructions from the upper computer.

The FPGA control unit 32 communicates with the upper computer, that is, receives instructions sent by the upper computer and injects corresponding fault signals into the external ECU, as well as transmits input/output signals through the input/output unit 34.

Among the plurality of fault injection units 33, each fault injection unit 33 may be connected between the Fault Rail and the external ECU. That is, the single fault injection module 30 can achieve fault testing of a plurality of external ECUs through the plurality of fault injection units 33.

A control terminal of each fault injection unit 33 may be connected to the FPGA control unit. The FPGA control unit may receive control instructions from the upper computer through a PCIe channel and send control signals to the fault injection units 33, which may select corresponding fault signals from the Fault Rail according to the control signals and inject the fault signals into the external ECUs or into voltage signals provided by the ECUs to corresponding hardware loads.

Among the plurality of input/output units 34, each input/output unit 34 may be connected between the external ECU and the corresponding fault injection unit 33. A control terminal of the input/output unit 34 may be connected to the FPGA control unit. According to the input/output signals sent by the FPGA control unit, the input/output unit 34 may collect signal voltage sent by the external ECU to the hardware load, or provide signal voltage to the external ECU.

In the present embodiment, the fault injection module 30 can integrate a transmission function of input/output signals and a fault injection function. The fault injection module 30 can achieve fault injection into the external ECU, and can also transmit voltage signals sent by the external ECU to the upper computer or provide corresponding voltage signals to the external ECU according to the control instructions of the upper computer, that is, can achieve signal input or output. By integrating the input or output function and the fault injection function into the same board, namely, into the fault injection module 30, the degree of integration of the fault injection device can be improved, and a high integration effect can be achieved.

In some embodiments, the input/output unit 34 may include an analog input unit 341, an analog output unit 343, a digital input unit 342, or a digital output unit 344.

It should be noted that the plurality of input/output units 34 included in the single fault injection module 30 are of the same type. For example, the plurality of input/output units 34 included in the single fault injection module 30 may be all analog input units 341, analog output units 343, digital input units 342, or digital output units 344.

With reference to Fig. 3, in some embodiments, the analog input unit 341 may include a first signal conditioning circuit OP1 and an analog-to-digital conversion chip ADC.

One input terminal of the first signal conditioning circuit OP1 is connected to a reference ground terminal of the external ECU, and the other input terminal is connected to an output terminal of the external ECU through the fault injection unit 33. The analog-to-digital conversion chip ADC is connected between an output terminal of the first signal conditioning circuit OP1 and the FPGA control unit.

In a single fault injection module 30, the input/output unit 34 is an analog input unit 341 as an example, where one fault injection unit 33 and the corresponding analog input unit 341 can form an analog voltage collection channel.

In the analog voltage collection channel, the first signal conditioning circuit OP1 can obtain input voltage from the reference ground terminal of the ECU and output voltage sent to the load by the ECU after fault injection by the fault injection unit 33. After the first signal conditioning circuit OP1 performs signal conditioning on the difference between the two channels of voltage, the signal can be collected by the analog-to-digital conversion chip ADC and the converted digital signal can be transmitted to the FPGA control unit which can transmit the digital signal to the upper computer by means of communication through the PCIe bus.

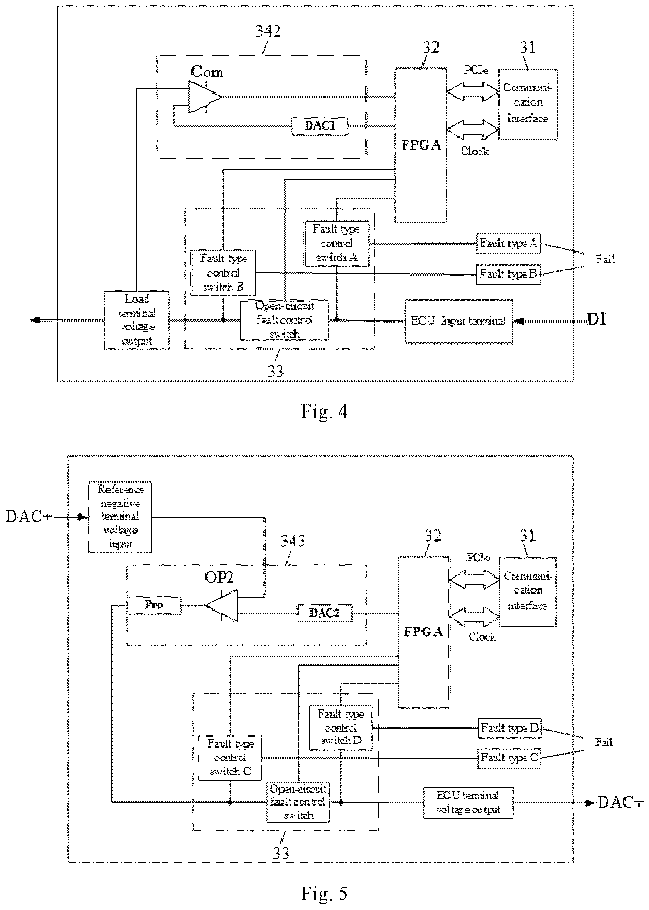

With reference to Fig. 4, in some embodiments, the digital input unit 342 may include a first digital-to-analog conversion chip DAC1 and a comparator Com.

The first digital-to-analog conversion chip DAC1 may be connected to the FPGA control unit, and the first digital-to-analog conversion chip DAC1 may generate corresponding analog voltage according to the output voltage signal provided by the FPGA control unit. The analog voltage is generated after the upper computer sets the digital level corresponding to a threshold of the comparator Com and sends the digital signal to the FPGA control unit through the PCIe bus and then the FPGA control unit controls the first digital-to-analog conversion chip DAC1 by means of SPI communication.

Two input terminals of the comparator Com are connected to an output terminal of the first digital-to-analog conversion chip DAC1 and the output terminal of the external ECU, respectively.

The voltage received by the positive input terminal of the comparator Com is the analog voltage generated by the first digital-to-analog conversion chip DAC1. The voltage received by the reverse input terminal of the comparator Com is the output voltage sent to the load terminal by the fault injection unit 33.

After the comparator Com compares the two channels of voltage, the output signal of the comparator Com is transmitted to the upper computer through the FPGA control unit to complete the collection of digital signals.

With reference to Fig. 5, in some embodiments, the analog output unit 343 may include a second digital-to-analog conversion chip DAC2, a second signal conditioning circuit OP2, and an overvoltage/overcurrent protection circuit Pro.

The second analog-to-digital conversion chip DAC2 may be connected to the FPGA control unit, and the second digital-to-analog conversion chip DAC2 may generate corresponding analog voltage according to the output voltage signal provided by the FPGA control unit.

Two input terminals of the second signal conditioning circuit OP2 are connected to the reference ground terminal of the external ECU and the second digital-to-analog conversion chip DAC2 respectively for signal conditioning on the input voltage of the reference ground terminal of the ECU and the analog voltage output by the second digital-to-analog conversion chip DAC2 to generate analog voltage required by the ECU.

The overvoltage/overcurrent protection circuit Pro may be connected between the input terminals of the second signal conditioning circuit OP2 and the fault injection unit 33. The analog voltage generated by the second signal conditioning circuit OP2 is transmitted to the external ECU through the overvoltage/overcurrent protection circuit Pro and the fault injection unit 33.

Understandably, similar to the digital output unit 344, the upper computer can send voltage value data to the FPGA control unit through the PCIe bus, the FPGA control unit transmits the voltage value data to the second digital-to-analog conversion chip DAC2, and the second digital-to-analog conversion chip DAC2 outputs the corresponding analog voltage.

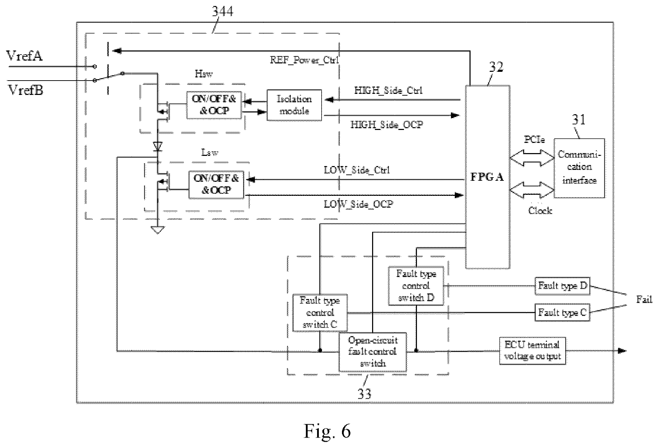

With reference to Fig. 6, in some embodiments, the digital output unit 344 may include a high-side driver module Hsw and a low-side driver module Lsw.

The high-side driver module Hsw may be connected between a reference voltage terminal and an output voltage terminal, and a control terminal of the high-side driver module Hsw is connected to the FPGA control unit through an isolation module.

The low-side driver module Lsw may be connected between the reference ground terminal and the output voltage terminal, and a control terminal of the low-side driver module Lsw is connected to the FPGA control unit.

The FPGA control unit can achieve alternating conduction between the high-side driver module Hsw and the low-side driver module Lsw by adjusting the duty cycle and frequency of output signals, to generate digital voltage signals.

Understandably, an output voltage terminal of the digital output unit 344 may be connected to the fault injection unit 33, to send the generated digital voltage to the ECU through the fault injection unit 33.

In some embodiments, the digital output unit 344 may further include a high-side switch module.

A plurality of input terminals of the high-side switch module are connected to a plurality of reference voltage terminals, respectively, an output terminal of the high-side switch module is connected to the high-side drive module Hsw, and a control terminal of the high-side switch module is connected to the FPGA control unit.

For example, the reference voltage terminal includes VrfA and VrfB, the FPGA control unit can send a selection signal to the high-side switch module, so that the high-side switch module selects, according to the selection signal, one of the VrfA and the VrfB with different voltage to connect with the high-side driver module Hsw.

With reference to Fig. 3 to Fig. 6 together, in some embodiments, the fault injection unit 33 may include an open-circuit fault control switch and two fault type control switches.

The open-circuit fault control switch may be connected to the external ECU. When the FPGA control unit sends an open-circuit fault signal to the open-circuit fault control switch which can be turned on in response to the open-circuit fault signal.

Understandably, as shown in Fig. 3 and Fig. 4, when the input/output unit 34 is an analog input unit 341 or a digital input unit 342, the open-circuit fault control switch may be connected between the ECU and the corresponding load. When the open-circuit fault control switch is turned off, the load cannot receive signals sent by the ECU.

As shown in Fig. 5 and Fig. 6, when the input/output unit 34 is an analog output unit 343 or a digital output unit 344, the open-circuit fault control switch may be connected between the ECU and the analog output unit 343 or the digital output unit 344. When the open-circuit fault control switch is turned off, the ECU cannot receive analog voltage or digital voltage.

Among the two fault type control switches, one fault type control switch is connected between a first fault rail and a first terminal of the open-circuit fault control switch, and the other fault type control switch is connected between a second fault rail and a second terminal of the open-circuit fault control switch. For example, the fault type control switches A and B in Fig. 3 and Fig. 4 are connected to the two terminals of the open-circuit fault control switch respectively, while the fault type control switches C and D in Fig. 5 and Fig. 6 are connected to the two terminals of the open-circuit fault control switch respectively.

The FPGA control unit is connected to a control terminal of the open-circuit fault control switch and control terminals of the fault type control switches respectively. The upper computer can simulate a fault type as needed, select the corresponding fault type switch, and communicate with the FPGA control unit through the PCIe bus, and the FPGA control unit controls the fault type control switch to be turned on or off, or controls the open-circuit fault control switch to be turned on or off to achieve the selection of the fault type.

In some embodiments, the fault includes two current fault rails and two capacitor fault rails.

As shown in Fig. 3 and Fig. 4, the fault type control switches A and B correspond to two high current fault rails respectively. As shown in Fig. 5 and Fig. 6, the fault type control switches C and D correspond to two small capacitor fault rails respectively.

With reference to Fig. 3 to Fig. 7, when the input/output unit 34 included in the fault injection module 30 is an analog input unit 341 or a digital input unit 342, the fault injection module 30 may be connected to the two current fault rails A and B connected to the two fault type control switches respectively.

When a fault needs to be injected into the side close to the first terminal of the open-circuit fault control switch, the upper computer can transmit the fault signal to the execution board module 20 through the PCIe bus, and the execution board module 20 transmits the fault signal to one of the current fault rails through the slot on the backplane module 10. The current fault rail is a fault rail connected to the fault type control switch close to the first terminal of the open-circuit fault control switch among the two current fault rails. The FPGA control unit controls the fault type control switch to be turned on to achieve the injection of the fault signal.

Similarly, when the input/output unit 34 included in the fault injection module 30 is an analog output unit 343 or a digital output unit 344, the fault injection module 30 may be connected to the two capacitor fault rails C and D. The two capacitor fault rails C and D are connected to the two fault type control switches respectively.

With reference to Fig. 7, in some embodiments, the above fault injection testing system may include at least two backplane modules 10.

The execution board module 20 may be connected to one first connector con1 and two second connectors con2 of the switch chip 11 of one of the backplane modules 10.

The fault rails of the plurality of backplane modules 10 may be cascaded through connectors. When the execution board module 20 provides a fault signal for the fault rail of one of the backplane modules 10, it is equivalent to providing the same fault signal for the fault rails of all the backplane modules 10. For example, as shown in Fig. 7, fault rail A and fault rail B may be cascaded with another backplane module 10 through connectors J1 and J2. Fault rail C and fault rail D may be cascaded with another backplane module 10 through connector X1.

When the plurality of backplane modules 10 are provided, the number of expandable fault injection modules 30 is greatly increased compared to a single backplane module 10. In this case, only one execution board module 20 is still required to provide the same fault signal for the fault rails of the plurality of backplane modules 10, which can reduce the number of execution board modules 20 and reduce system costs.

Similarly, synchronous clock signals of the plurality of backplane modules 10 are cascaded through the connectors to achieve clock synchronization of the system. For example, as shown in Fig. 7, a synchronous clock signal can be cascaded with another backplane module 10 through connector X1, so that each backplane module 10 can send the clock signal to the corresponding fault injection module 30, and each fault injection module 30 can achieve accurate time synchronization.

In some embodiments, the execution board module 20 may include an FPGA control module, a driver module, and a switch module. The FPGA control module may be connected to the downlink port of the switch chip 11 through the first connector con1 to achieve communication interaction with the upper computer through the switch chip 11. After the upper computer sends a corresponding control instruction, the FPGA control module can control the conduction state of the switch module according to the control instruction to generate a corresponding fault signal, and send the generated fault signal to the Fault Rail through the second connector con2, so that the fault injection module 30 obtains the corresponding fault signal from the Fault Rail through the second connector con2.

In the above process of generating the fault signal, because the control signal output by the FPGA control module is a low voltage signal, the FPGA control module may not directly perform switch driving when the switch module is a power device. In this case, the driver module can be connected between the FPGA control module and the switch module, and can convert the low voltage signal output by the FPGA control module into a voltage signal capable of driving the switch module to be turned on or off.

The functional blocks shown in the above structural block view can be implemented as hardware, software, firmware, or a combination thereof. When implemented in hardware, the functional blocks can be, for example, an electronic circuit, an application-specific integrated circuit (ASIC), appropriate firmware, plug-ins, function cards, etc. When implemented in software, the elements of the present disclosure are programs or code segments configured to perform required tasks. The programs or code segments may be stored in a machine-readable medium, or transmitted over a transmission medium or communication link through data signals carried in carrier waves. The "machine-readable medium" may include any medium that can store or transmit information. Examples of the machine-readable medium include an electronic circuit, a semiconductor memory device, an ROM, a flash memory, an erasable ROM (EROM), a floppy disk, a CD-ROM, an optical disk, a hard disk, an optical fiber medium, a radio frequency (RF) link, etc. The code segments may be downloaded via a computer network such as the Internet and Intranet.

It should be noted that the terms "include", "comprise", or any variants thereof are intended to cover a non-exclusive inclusion. As such, a process, method, article, or device including a series of elements not only includes these elements, but also includes other elements not definitely listed, or further includes inherent elements of the process, method, article, or device.

Specific examples are used above to elaborate the principle and implementations of the present disclosure. The descriptions of the above examples are merely used for helping understand the method of the present disclosure and the core idea thereof. The above are merely the preferred implementations of the present disclosure. It should be pointed out that, due to the limitations of textual expression, there are objectively infinite specific structures. For those of ordinary skill in the art, many improvements, modifications, or changes can be made and the above technical features can be combined in an appropriate way without departing from the principle of the present disclosure. These improvements, modifications, or combinations, or the direct use of the concepts and technical solutions of the present disclosure to other occasions without improvement, shall be fall within the scope of protection of the present disclosure.

## Claims

1. A fault injection testing system, comprising:
a backplane module (10) comprising a switch chip (11), a plurality of first connectors (con1), and a plurality of second connectors (con2), the plurality of second connectors (con2) being connected to a fault rail, one uplink port of the switch chip (11) being configured to be connected to an external upper computer, and a plurality of downlink ports of the switch chip (11) being connected to the plurality of first connectors (con1) respectively;
an execution board module (20) connected to the corresponding first connector (con1) and two second connectors (con2) and configured to communicate with the upper computer through the first connector (con1) and to provide a corresponding fault signal for the fault rail through one of the two second connectors (con2) in response to a fault selection instruction of the upper computer; and
at least one fault injection module (30), each of which being connected to the corresponding first connector (con1) and the corresponding second connector (con2), and being configured to be connected to an external electronic control unit and to communicate with the upper computer through the first connector (con1) and select the fault signal from the fault rail for injection through the second connector (con2) in response to a fault injection instruction of the upper computer.

2. The fault injection testing system according to claim 1, wherein the backplane module (10) further comprises a plurality of slots connected to the first connectors (con1) and the second connectors (con2); and
wherein when the execution board module (20) or the fault injection module (30) is inserted into the corresponding slot, the execution board module (20) is connected to one of the plurality of first connectors (con1) and two of the plurality of second connectors (con2), and the fault injection module (30) is connected to the first connector (con1) and the second connector (con2).

3. The fault injection testing system according to claim 1 or 2, wherein the first connector (con1) is a high-speed and high-density connectors connected to one downlink port of the switch chip (11) and configured to connect the execution board module (20) or the fault injection module (30) with the switch chip (11) for communication; and
the second connectors (con2) is a high current connector connected to the fault rail and configured to connect the execution board module (20) or the fault injection module (30) with the fault rail through the backplane module (10).

4. The fault injection testing system according to any one of claims 1-3, wherein the fault injection module (30) comprises:
a communication interface (31) connected to the first connector (con1) corresponding to the fault injection module (30);
an FPGA control unit (32) connected to the communication interface (31) and configured to communicate in response to control instructions of the upper computer;
a plurality of fault injection units (33), each of which being connected between the fault rail and the external electronic control unit, a control terminal of each of plurality of fault injection units (33) being connected to the FPGA control unit (32), and configured to, in response to a control signal of the FPGA control unit (32), select the fault signal from the fault rail to inject the fault signal into the external electronic control unit; and
a plurality of input/output units (34), each of which being connected between the external electronic control unit and the fault injection unit (33), a control terminal of the input/output unit (34) being connected to the FPGA control unit (32), and the input/output unit being configured to, in response to an input/output signal of the FPGA control unit (32), collect signal voltage from the external electronic control unit or provide signal voltage to the external electronic control unit.

5. The fault injection testing system according to claim 4, wherein the input/output unit (34) comprises an analog input unit (341), an analog output unit (343), a digital input unit (342), or a digital output unit (344).

6. The fault injection testing system according to claim 5, wherein the analog input unit (341) comprises:
a first signal conditioning circuit (OP1), one of input terminals of which being connected to a reference ground terminal of the external electronic control unit, and the other input terminals of which being connected to an output terminal of the external electronic control unit through the fault injection unit (33); and
an analog-to-digital conversion chip (ADC) connected between an output terminal of the first signal conditioning circuit (OP1) and the FPGA control unit (32).

7. The fault injection testing system according to claim 5 or 6, wherein the digital input unit (342) comprises:
a first digital-to-analog conversion chip (DAC1) connected to the FPGA control unit (32) and configured to generate analog voltage in response to an output voltage signal; and
a comparator (Com), two input terminals of which being connected to an output terminal of the first digital-to-analog conversion chip (DAC1) and the output terminal of the external electronic control unit respectively.

8. The fault injection testing system according to any one of claims 5-7, wherein the analog output unit (343) comprises:
a second digital-to-analog conversion chip (DAC2) connected to the FPGA control unit (32) and configured to generate analog voltage in response to an output voltage signal;
a second signal conditioning circuit (OP2), two input terminals of which being connected to the reference ground terminal of the external electronic control unit and the second digital-to-analog conversion chip respectively to amplify the analog voltage; and
an overvoltage/overcurrent protection circuit (Pro) connected between the input terminals of the second signal conditioning circuit (OP2) and the fault injection unit (33).

9. The fault injection testing system according to any one of claims 5-8, wherein the digital output unit (344) comprises:
a high-side driver module (Hsw) connected between a reference voltage terminal and an output voltage terminal, a control terminal of the high-side driver module (Hsw) being connected to the FPGA control unit (32) through an isolation module; and
a low-side driver module (Lsw) connected between the reference ground terminal and the output voltage terminal, a control terminal of the low-side driver module (Lsw) being connected to the FPGA control unit (32);
wherein the FPGA control unit (32) is configured to control the connection and disconnection of the high-side driver module (Hsw) and the low-side driver module (Lsw) by adjusting a duty cycle and frequency of output signals, to generate digital voltage signals.

10. The fault injection testing system according to claim 9, wherein the digital output unit (344) further comprises:
a high-side switch module, a plurality of input terminals of which are connected to a plurality of reference voltage terminals respectively, an output terminal of which being connected to the high-side driver module (Hsw), a control terminal of which being connected to the FPGA control unit (32), and the high-side switch module being configured to connect one of the plurality of input terminals to the output terminal in response to a selection signal.

11. The fault injection testing system according to any one of claims 4-10, wherein the fault injection unit (33) comprises:
an open-circuit fault control switch connected to the external electronic control unit and configured to be turned off in response to an open-circuit fault signal; and
two fault type control switches, one of which is connected between a first fault rail and a first terminal of the open-circuit fault control switch, and the other of which is connected between a second fault rail and a second terminal of the open-circuit fault control switch;
wherein the FPGA control unit (32) is connected to a control terminal of the open-circuit fault control switch and control terminals of the fault type control switch.

12. The fault injection testing system according to any one of claims 5-10, wherein the fault rail comprises two current fault rails and two capacitor fault rails; and
the fault injection module (30) comprising the analog input unit (341) or digital input unit (342) is connected to the two current fault rails, and the fault injection module (30) comprising the analog output unit (343) or digital output unit (344) is connected to the two capacitor fault rails.

13. The fault injection testing system according to any one of claims 1-10, wherein the fault injection testing system comprises at least two backplane modules (10), and the execution board module (20) being connected to the first connector (con1) and second connector (con2) of one of the backplane modules (10), the fault rails of the backplane modules (10) being cascaded through connectors, and clock signal rails of the plurality of backplane modules (10) being cascaded through connectors.
